# EUROPEAN PATENT SPECIFICATION

(11) **EP 0 454 222 B1**
(45) Date of publication and mention of the grant of the patent: **03.01.1996**
(21) Application number: 91200903.2
(22) Date of filing: 17.04.1991
(51) Int. Cl.: C04B 28/02, C04B 14/00, C04B 20/00

(54) **Use of sepiolite in manufacturing processes of fiber reinforced products containing mica.**
Verwendung von Sepiolith in Verfahren zur Herstellung von mit Fasern verstärkten Produkten
Utilisation de sépiolite dans des procédés de production de produits contenant du mica et renforcés par des fibres.

(30) Priority: 24.04.1990 ES 9001149
(43) Date of publication of application: 30.10.1991
(73) Proprietor: TOLSA S.A., E-28043 Madrid (ES)
(72) Inventor: Santaren Rome, Julio, E-28940 Fuenlabrada (Madrid) (ES); Alvarez Berenguer, Antonio, E-28034 Madrid (ES); Guillon, Robert D., Poulton le Fylde, Lancashire FY6 8HB (GB)
(74) Representative: Ungria Lopez, Javier

(56) References cited:
- EP-A- 0 252 210
- US-A- 4 370 167

## Description

The present invention refers to the use of rheological grade sepiolite in the manufacturing of fiber reinforced products containing mica and, in particular, of products that have an inorganic binder matrix that hardens in water, such as for example Portland cement or aluminous cement, calcium silicate, for the purpose of substantially improving the interlaminar adhesion and homogeneity of the sheets.

The normal manufacturing process of the products reinforced with fibers, such as smooth or corrugated sheets, is the elimination of water of an aqueous slurry of an inorganic binder capable of hardening in water that contains reinforcing fibers, and subsequently the setting of the agglomerant in the material, once the water has been eliminated, either letting it react in environmental conditions, or subjecting it to an autoclave process or else subjecting it to another moderate heating process.

Although there are different manufacturing processes of products reinforced with fibers, such as the Hatzcheck-Mazza process and the Magnani process, the one used the most is the Hatzchek process.

In the Hatzchek process an aqueous pulp is prepared with a solids concentration normally between 4 and 20 % and then this pulp is transferred to some tanks with rotary cylindric filters. The rotary filter collects the product reinforced with fibers and transfers it to the felt of an endless conveyor belt, forming a fine sheet. The felt passes over vacuum tanks that drain the water and finally transfer the sheets to a forming cylinder or mandrel. The sheets winds up continuously until a plate of the required thickness is formed. It is cut axially and the formed sheet is separated. If a corrugated sheet is desired, the smooth sheet obtained is adequately molded. Finally the inorganic binder is set.

Upto until 10 years ago the fibers used were normally asbestos fibers, however, these fibers are being abandoned due to the danger that they represent for health when they are not used with proper care. In place thereof, asbestos-free products are obtained by using synthetic organic fibers, such as polyacrylonitrile, polyvinyl alcohol, polyproylene, polyamide or polyester fibers or inorganic fibers such as alkali-resistant fiberglass or wollastonite. However these fibers do not have the capacity that asbestos fibers have for forming a reticle or mesh that retains the fine particles of the inorganic agglomerant during the water elimination process or filtering of the slurry. For this reason, cellulose pulp with a degree of refining from 20º to 70º in the Shopper Riegler scale is included in the composition of retention fibers capable of forming this reticle, for example. Other types of retention fibers such as synthetic pulps of polyolefins such as fibrillated polypropylene can also be used.

Likewise, process aids such as aluminum sulfate and dispersing agents such as, for example, polyacrylamides may be used. A process resulting in asbestos-free fiber reinforced articles solving the aforementioned drawbacks is disclosed in EP-A-0252210. In accordance with EP-A-0252210, rheological grade sepiolite is used as a component in the initial aqueous pulp whereby the retention of fine particles and control of the filtrability of the wet sheet are substantially improved.

However, sheets reinforced with fibers, thus manufactured, have serious problems of dimensional instability or a tendency to crack on the surface or on the edges, when they are used in climates characterised by sudden temperature and/or humidity changes.

In these cases, the dimensional instability can be reduced to acceptable limits or even eliminated, by adding mica, a relative cheap mineral product, to the aqueous slurry that is fed to the Hatzcheck machine or any other machine used to for the sheets of product reinforced with fibers.

However, although the mica makes it possible to solve the problem of cracking and offers good results in the case of manufacturing smooth sheets, use thereof also causes problems which have not yet been solved. The greatest problem is the reduction of interlaminar adhesion in the plates of products reinforced with fibers produced by the Hatzchek process. In this process, the smooth or corrugated sheets are made up of a group of sheets which are formed upon winding the sheet that the felt upon the forming cylinder collects and when the desired thickness is obtained, the same are automatically cut. The formed plates subsequently pass to the molding step in order to obtain the corrugated sheets. During this process the sheets are transferred to the molding step, or else they are piled up in the case of smooth plates, by means of a suction system that lifts up the plate. If the interlaminar adhesion is not good, as happens when mica is used, the separation of the wet sheets that form the sheet during the corrugation process is produced, thus, the plate is rejected by the production line or else there is partial delamination that results in problems when the plate is corrugated or the smooth sheets are piled up This increase of rejected plates leads to a reduction of production and a price increase of the final product.

The problems caused by the use of mica described above can be solved by the invention as claimed.

It has been discovered that rheological grade sepiolite , aside from improving the homogenization of the fibers and the cement in the initial slurry, improves the retention of fine particles and controls the drainage of the wet sheet during the manufacturing process in mixtures without mica, just as is described in European patent application 0252210. Surprisingly it has been discovered that use of rheolgical grade sepiolite moreover makes it possible to substantially solve the problems of delamination in the manufacturing of corrugated sheets with best dimensional stability that are produced when mica is used in the formulation of products reinforced with fibers to eliminate cracking. The use of rheological grade sepiolite, likewise, improves the uniformity and quality of the surfaces of the plates of the products reinforced with fibers, thus obtaining sheets with a more homogeneous surface, a particularly important characteristic for smooth painted plates, in which painting emphasizes the irregularities of the surface.

The use of rheological grade sepiolite, likewise, improves the mechanical resistance of the plates of product reinforced with fibers and their cross-breaking strength, upon reducing the orientation of the reinforcing fibers and improving the interlaminar adhesion.

The present invention, as has already been indicated above, refers to the use of rheological grade sepiolite, in the manufacturing processes of, fiber reinforced products containing mica said processes comprising the following steps:
a) Preparation of an aqueous slurry of the following components: (1) an inorganic binder that hardens in water, such as Portland cement, aluminous cement or calcium silicate; (2) reinforcing fibers; (3) retention fibers; (4) inorganic additives to improve filtration, flocculants or dispersing agents and, in general, any additive normally used in these products; (5) mica;
b) wet shaping of the articles by previous elimination of water;
c) curing of the shaped articles.

Specifically, the present invention is characterized by adding rheological grade sepiolite to the initial aqueous slurry in concentrations such that in the finished product, the amount of sepiolite is from 0.1 to 10 %. A specially suitable sepiolite product is rheological grade sepiolite obtained as is described in EP-A-0151499 or ES-Patents 535317, 534891 and 534838 which is characterized by containing more than 50 % sepiolite, a particle size smaller than 25 micra and a viscosity in water at 6 % solids concentration, higher than 5,000 cP (Brookfield, 5 rpm, 25º C.) (mPa.s) The specific surface of this product is higher than 120 m²/g and it may reach 340 m²/g (N₂, BET.) The dimensions of the sepiolite fibers vary between 0.2 and 2 µm long, 100-300 Å wide and 50-100 Å thick.

The generally used reinforcing fibers are selected from among cellulose, polyamide, polypropylene, polyester, polyvinyl alchohol, polyacrylonitrile and acrylic fibers. For their part, the retention fibers are selected from among cellulose pulp (long or short fiber with a Shopper-Riegler degree of refining of 20-70º C.), cotton or highly fibrillated polypropylene fibers.

Mica, for example, muscovite, phlogopite or biotite, is normally used in a percentage of at least 0.25 % by weight of solids of the slurry and up to a maximum of 20 %, and preferably between 0.5-10 % by weight. The particularly preferred concentration range is between 0.5-3 %.

Generally, the solids concentration of the slurry is between 5 and 50 %.

Rheological grade sepiolite is added to the initial slurry in powder form or else previously dispersed in water in a high shear stirrer, for example, paddle stirrers, hydropulpers, turbomixers or recirculatory mixers, until a slurry with a solids concentration between 1 and 20 % is obtained. For the preparation of this prior dispersion of sepiolite polyphosphate type dispersing agents or organic dispersing agents such as cationic, anionic or non-ionic polyacrylamides may be used, for the purpose of dispersing the clay. Generally, anionic polyacrylamides in a concentration based on the solids between 0.001 and 0.015 % are preferably used. Besides, and for the purpose of improving filtration, organic fibers such as MMMF "Man Made Mineral Fibers or wollastonite, are used in amounts, based on the solids between 0.2 and 4 %.

The invention in the most concrete and specific manner is illustrated in the following examples. However, said examples must not be considered as restrictive of the scope of the invention, which is determined exclusively by the enclosed set of claims.

### EXAMPLES

### Example 1

Corrugated sheets of products reinforced with fibers with the composition indicated in table I were manufactured, using sepiolite in one case and in the other, a colloidal filler, microsilica.

A 15 % slurry was prepared and it was fed into a conventional Hatzchek machine and the sheet thus formed with a thickness of 6.2 mm. was corrugated in the normal way. The corrugated sheets were cured at room temperature for 28 days obtaining sheets with a density greater than 1,100 kg/m³ and with the properties indicated in table I.

**TABLE I**

| Formulation and characteristics of the products reinforced with fibers prepared in Example 1. | | |
|---|---|---|
| | Formulation 1 | Formulation 2 |
| Portland cement (P-450) | 91.0 | 91.0 |
| Polyvinyl alcohol fiber | 1.5 | 1.5 |
| Cellulose pulp, 52º Shopper Riegler | 3.6 | 3.6 |
| Mica | 1.5 | 1.5 |
| Microsilica | 2.4 | - |
| Sepiolite* | - | 2.4 |
| Mechanical resistance (kg/cm²) | 480 | 540 |
| Density (kg/m³) | 1,300 | 1,310 |
| Delamination | YES | NO |
| Surface homogeneity | Normal | Very good |

| | | |
|---|---|---|
| * Commercial name Pagel S-9 of TOLSA, S.A. | | |

### Examples 2 and 3

These examples illustrate the effect of the sepiolite/mica ratio on the properties of the corrugated sheets prepared as is described in example 1.

**TABLE II**

| Formulation and characteristics of the products reinforced with fibers with a different sepiolite/mica ratio | | |
|---|---|---|
| | Formulation 3 | Formulation 4 |
| Portland cement | 91.6 | 90.0 |
| Polyvinyl alcohol fiber | 1.5 | 1.5 |
| Cellulose pulp | 3.6 | 3.6 |
| Mica | 1.5 | 1.5 |
| Sepiolite* | 1.8 | 3.4 |

| Properties of the corrugated sheet | | |
|---|---|---|
| Flexural strength | 520 | 510 |
| Density (kg/m³) | 1,360 | 1,300 |
| Delamination | NO | NO |
| Surface homogeneity | Very good | Very good |

| | | |
|---|---|---|
| * Commercial name Pangel S-9 of TOLSA, S.A. | | |

### Example 4

Fiber-reinforced cement sheets were manufactured with the composition indicated in table III, using rheological grade sepiolite as opposed to conventional micronized sepiolite and microsilica.

The slurries were prepared at a concentration of 6 % of solids and were fed into a conventional Hatzchek machine with two rotary filters, to obtain sheets with a thickness of 6.2 mm. using a pressure of 2 kg/cm². The sheets were cured at room temperature for 28 days. Table III summarises the relative efficacy of recovery of fines and the final properties of the sheets.

**TABLE III**

| Formulation and characteristics of the products reinforced with fibers obtained with rheological grade sepiolite as opposed to conventional sepiolite and microsilica | | | |
|---|---|---|---|
| | Formulation 5 | Formulation 6 | Formulation 7 |
| Portland cement (%) | 87.3 | 88.8 | 89.8 |
| PVA fiber (%) | 1.2 | 1.2 | 1.2 |
| Cellulose pulp (%) | 3.5 | 3.5 | 3.5 |
| Mica (%) | 3.0 | 3.0 | 3.0 |
| Microsilica (%) | 5.0 | - | - |
| Micronized sepiolite¹ (%) | - | 3.5 | - |
| Rheological grade sepiolite² (%) | - | - | 2.5 |
| Fines recovery efficacy³ (%) | 100 | 97.8 | 104 |
| Density (kg/m³) | 1448 | 1447 | 1402 |
| Water absorption (%) | 29.9 | 31.3 | 30.4 |
| Flexural strength (kg/cm²) | 134 | 129 | 133 |
| Flexural strenth in perpendicular direction (kg/cm²) (A) | 174 | 172 | 167 |
| Flexural strength in parallel direction (kg/cm²) (B) | 94 | 86 | 99 |
| A/B ratio | 1.86 | 1.99 | 1.84 |

| | | | |
|---|---|---|---|
| 1 Conventional micronized sepiolite | | | |
| 2 Commercial name Pangel SC of TOLSA, S.A. | | | |
| 3 Relative efficacy regarding that obtained with microsilica | | | |

The use of rheological grade sepiolite makes it possible to obtain a better efficacy of fines recovery, improving at the same time the flexural strengths in perpendicular and in parallel direction to the functioning of the Hatzcheck machine. It is noteworthy that these improvements are observed upon using half the concentration of rheological grade sepiolite than that of microsilica. Likewise, it is observed that adding rheological grade sepiolite makes it possible to reduce the density of the product without affecting the strength which makes it possible to obtain a larger number of sheets per weight unit, making the process more profitable.

Rheological grade sepiolite makes it possible to obtain some more outstanding improvements in fibrocement sheets than the ones obtained with conventional sepiolite, even using a lower concentration. In no case was delamination of the sheets obtained with rheological grade sepiolite observed.

### Example 5

This example illustrates the effect of the pressure of formation of the sheet on the properties of sheets obtained by using rheological grade sepiolite and microsilica.

Formulations were prepared just as is described in example 4, using 2.5 % of rheological grade sepiolite in comparison with 5 % microsilica, and using pressures of formation of plates of 3 and 4 kg/cm². The characteristics of the sheets obtained are shown in tables IV and V.

**TABLE IV**

| Formulation and characteristics of the products reinforced with fibers obtained with rheological grade sepiolite as opposed to microsilica with a pressure of formation of 3 kg/cm2 | | |
|---|---|---|
| | Formulation 8 | Formulation 9 |
| Microsilica (%) | 5 | - |
| Rheological grade sepiolite (%) | - | 2.5 |
| Fines recovery efficacy (%) | 100 | 104 |
| Density (kg/m³) | 1493 | 1495 |
| Water absorption (%) | 28.2 | 27.0 |
| Flexural strength (kg/cm²) | 137 | 143 |
| Flexural strength in perpendicular direction (kg/cm²) (A) | 181 | 187 |
| Flexural strength in parallel direction (kg/cm²) (B) | 93 | 99 |
| A/B ratio | 1.96 | 1.88 |

**TABLE V**

| Formulation and characteristics of the products reinforced with fibers obtained with rheological grade sepiolite as opposed to microsilica with a pressure of formation of 4 kg/cm² | | |
|---|---|---|
| | Formulation 10 | Formulation 11 |
| Microsilica (%) | 5 | - |
| Rheological grade sepiolite (%) | - | 2.5 |
| Fines recovery efficacy (%) | 100 | 104 |
| Density (kg/m³) | 1494 | 1555 |
| Water absorption (%) | 28.3 | 24.4 |
| Flexural strength (kg/cm²) | 139 | 145 |
| Flexural strength in perpendicular direction (kg/cm²) (A) | 184 | 187 |
| Flexural strength in parallel direction (kg/cm²) (B) | 94 | 104 |
| A/B ratio | 1.96 | 1.80 |

It is observed that upon increasing the pressure of formation of the sheet, the strength of the sheets obtained with sepiolite significantly increases more than the strength of the sheets with microsilica, reducing at the same time the ratio of the strengths in parallel direction and cross strength and reducing the water absorption, which results in some better characteristics of the final sheet.

## Claims

1. Use of sepiolite in manufacturing processes of fiber reinforced products containing mica, said processes comprising the following steps:
preparing an aqueous slurry of inorganic binder, reinforcing fibers, retention fibers, mica, inorganic additives to improve filtration, flocculants or dispersing agents and optionally other conventional additives;
wet shaping the articles by previous elimination of water;
curing the shaped articles;
characterized in that
- rheological grade sepiolite is added to the initial aqueous slurry having a mica content of 0.25 to 20% by weight referred to the solids of said slurry in such concentrations that the sepiolite concentration in the finnished product is 0.1 to 10%.

2. Use according to claim 1, characterized in that the article is shaped as a corrugated sheet.

3. Use according to claim 1, characterized in that the mica content referred to the solids in the slurry is 0.5 to 10%.

4. Use according to claim 1, characterized in that the reinforcing fibers are of cellulose, polyamide, polypropylene, polyester, polyvinyl alcohol, polyacrylonitrile or acrylics.

5. Use according to claim 3, characterized in that the mica content referred to the solids in the slurry is 0.5 to 3%.

6. Use according to claim 1, characterized in that the retention fibers are long fiber or short fiber cellulose pulp with a Hopper-Riegler degree of refining of 20-70º and whose concentration is higher than 0.5 % of the solids of the slurry.

7. Use according to claim 1, characterised in that the retention fibers are cotton pulp or highly fibrillated polypropylene fibers.

8. Use according to claim 1, characterized in that the inorganic binder is Portland cement, aluminous cement, another type of hydraulic cement or calcium silicate.

9. Use according to claims 1 to 8, characterized in that the rheological grade sepiolite is added to the initial slurry in powder form.

10. Use according to claims 1 to 8, characterized in that the rheological grade sepiolite is added to the initial slurry previously dispersed in water using a high shear stirrer, paddle stirrer, hydropulper, hydrodisintegrator or in a recirculating mixer and with a solid concentration between 1 and 20 %.

11. Use according to claims 1 to 8 and 10, characterized in that in the previous dispersion of rheological grade sepiolite polyphosphate type dispersing agents or organic dispersing agents such as cationic, anionic or nonionic polyacrylamides are used to facilitate the dispersion of the clay.

12. Use according to claim 1 to 11, characterized in that in the initial slurry anionic polyacrylamides are added in a concentration between 0.001 and 0.015 % based on the solids of the formulation.

13. Use according to claims 1 to 12, characterized in that organic fibers, MMMF or wollastonite are used to improve the filtration and in amounts based on solids comprised between 0.2 and 4%.

14. Use according to claims 1 to 13, characterized in that the density of the corrugated sheet is higher than 1,100 kg/m³.

## Patentansprüche

1. Verwendung von Sepiolith in Herstellungsverfahren von faserverstärkten Produkten, die Glimmer enthalten, wobei diese Verfahren die folgenden Schritte umfassen:
Herstellen einer wäßrigen Aufschlämmung von anorganischem Bindemittel, verstärkenden Fasern, Rückhaltefasern, Glimmer, anorganischen Zusätzen zur Verbesserung der Filtration, Flockungsmitteln oder Dispergiermitteln und gegebenenfalls anderen herkömmlichen Zusätzen;
Naßformen der Gegenstände durch vorherige Entfernung von Wasser;
Härten der geformten Gegenstände;
**dadurch gekennzeichnet,** daß
Sepiolith rheologischer Qualität zu der wäßrigen Ausgangslösung mit einem Glimmergehalt von 0,25 bis 20 Gew.-%, bezogen auf die Feststoffe der Aufschlämmung, in solchen Konzentrationen zugegeben wird, daß die Sepiolithkonzentration in dem Endprodukt 0,1 bis 10 % beträgt.

2. Verwendung nach Anspruch 1, **dadurch gekennzeichnet**, daß der Gegenstand als gewellte Tafel geformt wird.

3. Verwendung nach Anspruch 1, **dadurch gekennzeichnet**, daß der Glimmergehalt, bezogen auf die Feststoffe in der Aufschlämmung, 0,5 bis 10 % beträgt.

4. Verwendung nach Anspruch 1, **dadurch gekennzeichnet**, daß die verstärkenden Fasern aus Cellulose, Polyamid, Polypropylen, Polyester, Polyvinylalkohol, Polyacrylnitril oder Acryl sind.

5. Verwendung nach Anspruch 3, **dadurch gekennzeichnet**, daß der Glimmergehalt, bezogen auf die Feststoffe in der Aufschlämmung, 0,5 bis 3 % beträgt.

6. Verwendung nach Anspruch 1, **dadurch gekennzeichnet**, daß die Rückhaltefasern langfaserige oder kurzfaserige Cellulosepulpe mit einem Hopper-Riegler-Feinheitsgrad von 20 bis 70° sind und ihre Konzentration mehr als 0,5 % der Feststoffe der Aufschlämmung beträgt.

7. Verwendung nach Anspruch 1, **dadurch gekennzeichnet**, daß die Rückhaltefasern Baumwollpulpe oder hochfibrillierte Polypropylenfasern sind.

8. Verwendung nach Anspruch 1, **dadurch gekennzeichnet**, daß das anorganische Bindemittel Portlandzement, Tonerdeschmelzzement, eine andere Art von hydraulischem Zement oder Calciumsilikat ist.

9. Verwendung nach den Ansprüchen 1 bis 8, **dadurch gekennzeichnet**, daß der Sepiolith rheologischer Qualität der Ausgangsaufschlämmung in Pulverform zugegeben wird.

10. Verwendung nach den Ansprüchen 1 bis 8, **dadurch gekennzeichnet**, daß der Sepiolith rheologischer Qualität der Ausgangsaufschlämmung zuvor in Wasser dispergiert unter Verwendung eines Rührers mit hoher Scherwirkung, Paddel-Rührers, Hydropulpers, Hydrodesintegrators oder in einem Umwälzmischer und mit einer Feststoffkonzentration zwischen 1 und 20 % zugegeben wird.

11. Verwendung nach den Ansprüchen 1 bis 8 und 10, **dadurch gekennzeichnet**, daß bei der zuvor erfolgenden Dispergierung des Sepioliths rheologischer Qualität Dispergiermittel vom Polyphosphattyp oder organische Dispergiermittel, wie kationische, anionische oder nichtionische Polyacrylamide, verwendet werden, um die Dispergierung des Tons zu erleichtern.

12. Verwendung nach Anspruch 1 bis 11, **dadurch gekennzeichnet**, daß in der Ausgangsaufschlämmung anionische Polyacrylamide in einer Konzentration zwischen 0,001 und 0,015 %, bezogen auf die Feststoffe der Formulierung, zugegeben werden.

13. Verwendung nach den Ansprüchen 1 bis 12, **dadurch gekennzeichnet**, daß organische Fasern, MMMF oder Wollastonit zum Verbessern der Filtration und in Mengen, bezogen auf die Feststoffe, zwischen 0,2 und 4 % verwendet werden.

14. Verwendung nach den Ansprüchen 1 bis 13, **dadurch gekennzeichnet**, daß die Dichte der gewellten Tafel mehr als 1100 kg/m³ beträgt.

## Revendications

1. Utilisation de sépiolite dans des procédés de fabrication de produits renforcés par des fibres contenant du mica, lesdits procédés comprenant les étapes suivantes consistant :
à préparer une suspension aqueuse de liant inorganique, de fibres renforçantes, de fibres de rétention, de mica, d'additifs inorganiques pour améliorer la filtration, de floculants ou d'agents dispersants et facultativement d'autres additifs classiques ;
à façonner par voie humide les articles par élimination préalable de l'eau ;
à durcir les articles façonnés ;
caractérisée en ce que
on ajoute de la sépiolite de qualité rhéologique à la suspension aqueuse initiale présentant une teneur en mica de 0,25 à 20 % en poids, rapportée aux matières solides de ladite suspension, dans des concentations telles que la concentration en sépiolite dans le produit fini est de 0,1 à 10 %.

2. Utilisation selon la revendication 1, caractérisée en ce que l'article est façonné comme une plaque ondulée.

3. Utilisation selon la revendication 1, caractérisée en ce que la teneur en mica, rapportée aux matières solides dans la suspension, est de 0,5 à 10 %.

4. Utilisation selon la revendication 1, caractérisée en ce que les fibres renforçantes sont en cellulose, polyamide, polypropylène, polyester, alcool polyvinylique, polyacrylonitrile ou en matières acryliques.

5. Utilisation selon la revendication 3, caractérisée en ce que la teneur en mica, rapportée aux matières solides dans la suspension, est de 0,5 à 3 %.

6. Utilisation selon la revendication 1, caractérisée en ce que les fibres de rétention sont constituées de pâte de cellulose à fibres longues ou à fibres courtes présentant un degré Hopper-Riegler de raffinage de 20-70° et dont la concentration est supérieure à 0,5 % des matières solides de la suspension.

7. Utilisation selon la revendication 1, caractérisée en ce que les fibres de rétention sont constituées de pâte de coton ou de fibres de polypropylène hautement fibrillées.

8. Utilisation selon la revendication 1, caractérisée en ce que le liant inorganique est du ciment de Portland, du ciment alumineux, un autre type de ciment hydraulique ou du silicate de calcium.

9. Utilisation selon les revendications 1 à 8, caractérisée en ce qu'on ajoute la sépiolite de qualité rhéologique à la suspension initiale sous forme de poudre.

10. Utilisation selon les revendications 1 à 8, caractérisée en ce qu'on ajoute la sépiolite de qualité rhéologique à la suspension initiale préalablement dispersée dans de l'eau en utilisant un agitateur à cisaillement élevé, un agitateur à pales, un hydrotriturateur, un hydrodésintégrateur ou dans un mélangeur à recirculation et avec une concentration en matières solides comprise entre 1 et 20 %.

11. Utilisation selon les revendications 1 à 8 et 10, caractérisée en ce qu'on utilise dans la dispersion préalable de sépiolite de qualité rhéologique des agents dispersants de type polyphosphate ou des agents dispersants organiques, tels que des polyacrylamides cationiques, anioniques ou non ioniques pour faciliter la dispersion de l'argile.

12. Utilisation selon les revendications 1 à 11, caractérisée en ce qu'on ajoute dans la suspension initiale des polyacrylamides anioniques dans une concentration comprise entre 0,001 et 0,015 %, rapportée aux matières solides de la formulation.

13. Utilisation selon les revendications 1 à 12, caractérisée en ce qu'on utilise des fibres organiques, des MMMF ou de la wollastonite pour améliorer la filtration et dans des quantités rapportées aux matières solides comprises entre 0,2 et 4 %.

14. Utilisation selon les revendications 1 à 13, caractérisée en ce que la densité de la plaque ondulée est supérieure à 1 100 kg/m³.
